# EUROPEAN PATENT APPLICATION

(11) **EP 1 795 871 A1**
(43) Date of publication of application: **13.06.2007**
(21) Application number: 06076575.7
(22) Date of filing: 15.08.2006
(51) Int. Cl.: G01D 5/246, G01D 5/04, F16H 3/66

(54) **Multi-turn non-contact angular position sensor**

(30) Priority: 08.12.2005 US 298086
(71) Applicant: BEI Sensors & Systems Company, Inc., Sylmar, California 91342 (US)
(72) Inventor: Madni, Asad M., Los Angeles California 90064 (US); Vuong, Jim B., Northridge California 91326 (US)
(74) Representative: Newstead, Michael John

(57) **Abstract**

A multi-turn angular position sensor for generating a pulse width modulated (PWM) output corresponding to greater than a 360 degree turn of a shaft. The angular position sensor includes main, first and second gears and first and second angular position sensor assemblies. The main gear can be mounted on the shaft and has a plurality of teeth formed around its periphery. The first and second gears respectively have first and second teeth that are engaged with the main gear teeth. The first and second angular position sensor assemblies respectively include first and second coupler disks coupled to rotate together respectively with the first and second gears. The first and second angular position sensor assemblies generate first and second output signals corresponding to a single 360 degree turn of the first and second coupler disks, respectively. A PWM generator generates the PWM output according to the first and second output signals.

## Description

### FIELD OF THE INVENTION

The present invention relates to non-contact angular position sensor, and more particularly to non-contact angular position sensor capable of sensing angular position over multiple turns.

### BACKGROUND

Recently in the automotive industry, electric motors have been replacing power steering hydraulic pumps because of the requirements for electronic stability control and roll prevention systems and better fuel efficiency (i.e., engine power reduction). The main steering angle sensor for such electric motors needs to be a multi-turn rotary position sensor.

Present steering angle sensing techniques include optical encoders with multi-turn counters that require specialized algorithms to combine the turn counter code to the single turn optical encoder information. Another technique used is a gear reduction ratio (in this application, for example, 6:1) technique to convert a multi-mechanical turn into a single turn rotation. However, this method degrades the resolution and linearity accuracy performance of the sensor. By way of example, a sensor with 1% of linearity error will be converted to a 6% error due to the 6:1 gear reduction ratio, and a step size of 0.01 degree in a single-turn unit becomes 0.06 degree/step in a six-turn unit.

Therefore, it is desirable to provide a multi-turn rotary position sensor that has better resolution and linearity accuracy performance for automotive and other applications.

### SUMMARY OF THE INVENTION

In an exemplary embodiment according to the present invention, a multi-turn angular position sensor for generating a pulse width modulated (PWM) output corresponding to greater than a 360 degree turn of a shaft is provided. The multi-turn angular position sensor includes a main gear adapted to be mounted on the shaft, the main gear having a plurality of teeth formed around its periphery, a first gear having a plurality of first teeth formed around its periphery, the first teeth being engaged with the teeth of the main gear, and a second gear having a plurality of second teeth formed around its periphery, the second teeth being engaged with the teeth of the main gear. The multi-turn angular position sensor also includes first and second angular position sensor assemblies. The first angular position sensor assembly includes a first coupler disk coupled to rotate together with the first gear, the first angular position sensor assembly being adapted to generate a first output signal corresponding to a single 360 degree turn of the first coupler disk. The second angular position sensor assembly includes a second coupler disk coupled to rotate together with the second gear, the second angular position sensor assembly being adapted to generate a second output signal corresponding to a single 360 degree turn of the second coupler disk. A PWM generator generates the PWM output according to the first output signal and the second output signal.

In another exemplary embodiment according to the present invention, a steering shaft assembly including a shaft and a multi-turn angular position sensor coupled to the shaft and for generating a pulse width modulated (PWM) output corresponding to greater than a 360 degree turn of the shaft, is provided.

In yet another exemplary embodiment of the present invention, a method of generating a pulse width modulated (PWM) output corresponding to greater than a 360 degree turn of a shaft, is provided. A first angular position output signal is generated by engaging first teeth of a first gear coupled to a first angular position sensor assembly with a teeth of a main gear mounted on a shaft. A second angular position output signal is generated by engaging second teeth of a second gear coupled to a second angular position sensor assembly with the teeth of the main gear mounted on the shaft. The PWM output corresponding to the first output signal and the second output signal is generated.

These and other aspects of the invention will be more readily comprehended in view of the discussion herein and accompanying drawings.

### BRIEF DESCRIPTION OF THE DRAWINGS

FIG. 1 is a side view of an angular position sensor assembly, which may be used to implement exemplary embodiments of the present invention;
FIG. 2 is a plan view of both transmitter and receiver portions of the angular position sensor assembly of FIG. 1;
FIG. 3 is a plan view of a coupler disk of the angular position sensor assembly of FIG. 1;
FIG. 4 is a functional block diagram of an angular position sensor, the principle of which may be used to implement exemplary embodiments of the present invention;
FIGs. 5A and 5B are timing diagrams that illustrate 10% and 40% duty cycles, respectively, of a single-turn angular position sensor;
FIG. 6A is an exploded perspective view of a multi-turn angular position sensor for a steering shaft assembly in an exemplary embodiment of the present invention;
FIG. 6B is a simplified schematic view of the mechanical design for a gear assembly in the multi-turn angular position sensor of FIG. 6A mounted on a steering shaft;
FIG. 7 is a functional block diagram of a multi-turn angular position sensor in an exemplary embodiment of the present invention;
FIGs. 8A and 8B respectively show duty cycle generation of a multi-turn angular position sensor when N=0 and N=6; and
FIG. 9 is a block diagram of a multi-turn PWM generation system in another exemplary embodiment of the present invention.

### DETAILED DESCRIPTION

Efforts have been made in the past to create a multi-turn (MT), non-contact angular position sensor (NCAPS). One such MT-NCAPS is disclosed in a commonly-owned, co-pending U.S. Patent application No. 10/813,329 entitled "Programmable, Multi-Turn, Pulse Width Modulation Circuit for a Non-Contact Angular Position Sensor" and published on September 29, 2005 as U.S. Patent Application Publication No. US 2005/0212577.

In exemplary embodiments of the present invention, a multi-turn angular position sensor (e.g., MT-NCAPS) based on a Vernier concept, is provided. Using the Vernier concept, a pair of secondary gears (i.e., first and second gears) are used to translate multiple turns of a main gear, which would normally result in multiple full duty cycles (i.e., 0% to 100%) of a PWM output of a conventional angular position sensor, to a single full duty cycle.

The multi-turn angular position sensor of the present invention is based on the principles of an angular position sensor disclosed in U.S. Patent No. 6,304,076 entitled "Angular Position Sensor with Inductive Attenuating Coupler," the entire content of which is incorporated by reference herein. In the exemplary embodiments described below, two angular position sensor (e.g., NCAPS) assemblies are mechanically coupled together via first and second secondary gears coupled to a main gear mounted on a shaft using Vernier concept to form a Multi-turn Vernier angular position sensor that produces a multiple-turn output of a full duty cycle (i.e., 0% to 100%) of a PWM signal. The NCAPS or the MT-NCAPs may be referred to simply as an "angular position sensor" or a "multi-turn angular position sensor" herein.

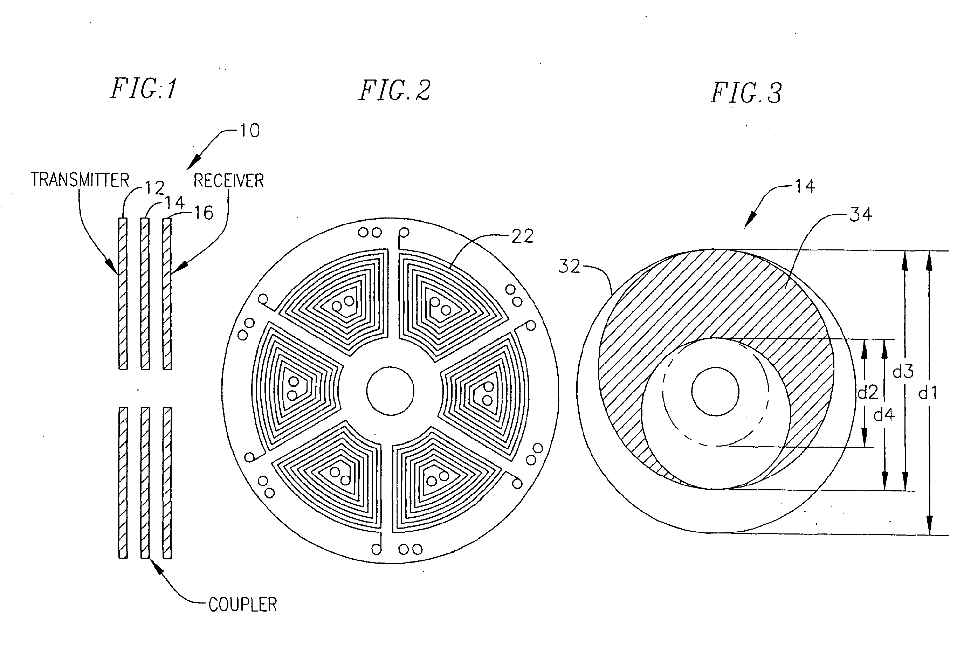

Referring now to FIG. 1, an angular position sensor assembly 10 includes a transmitter 12, a receiver 16 and a coupler disk 14 interposed therebetween. As can be seen in FIG. 2, both the transmitter 12 and the receiver 16 each have formed thereon a plurality of loop antennas 22. The loop antennas are formed from independent spiral conductive coils that are segmentally arranged in a circular pattern around the respective disk of the transmitter and the receiver. The six antennas 22 of FIG. 2 completely encircle the 360 degrees of the disk. While six loop antennas 22 are shown in FIG. 2, the number of loop antennas on the transmitter/receiver depends on the desired phase separation between adjacent channels, and may be different in other embodiments.

The transmitter 12 and the receiver 16 are substantially fixed with respect to one another. The coupler disk 14 turns in accordance with the mechanical turn of the device (e.g., a steering shaft of an automobile) in which the angular position sensor is used. Each loop antenna 22 in the transmitter 12 is used to transmit a signal that is received by a corresponding loop antenna 22 in the receiver. When there is no interfering (attenuating) object in the signal path, the amplitude of the received signal is maximum. However, if an attenuating object is used to cause interference in this path, the amplitude of the received signal is attenuated. The received signal is attenuated proportionally to the amount of interference provided by the interfering object.

FIG. 3 is the coupler disk 14 having a disk 32 on which a coupler pattern 34 is formed. The coupler pattern 34 provides the variable attenuation in the angular position sensor assembly 10 as an interfering (attenuating) object. The disk 32, for example, is made of an insulating material such as plastic. The coupler pattern 34 is made of metal such as copper. In one embodiment, d₃ = (1/4)x(3d₁+d₂) and d₄ = (1/4)x(d₁+3d₂).

Theoretically, a single channel should be adequate to detect and provide the position and/or angular displacement information. However, since the detected amplitude is also affected by the separation between the transmitter 12 and the receiver 16, and also the power level of the transmitted signal, errors resulting from this uncertainty may not provide performance acceptable for critical automotive, industrial, and/or aerospace applications. Therefore, a multi-channel system with an amplitude to phase conversion technique is used in the angular position sensor to convert the amplitude information into phase information.

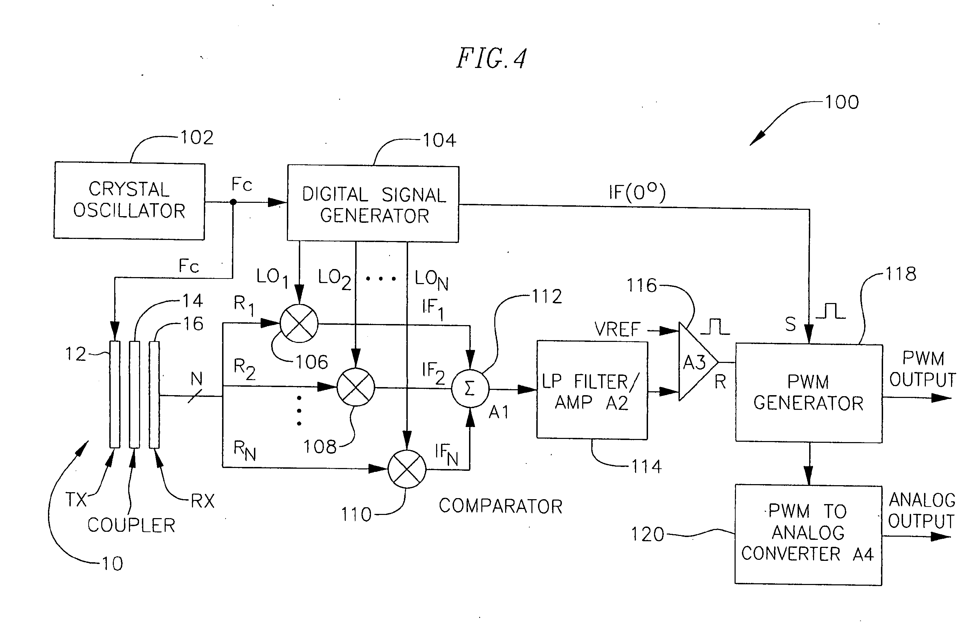

The phase separation in degrees between adjacent channels is determined by Δθ = 2n/N, where N is the number of channels. Therefore, in the angular position sensor illustrated in FIG. 2, Δθ = n/3 since N = 6. In an angular position sensor functional block diagram 100 of FIG. 4, the angular position sensor assembly 10 receives a signal having frequency Fc generated by a crystal oscillator 102. The frequency Fc, for example, may be 1 MHz. The frequency used may be different in other embodiments. The signal having frequency Fc is also provided to a digital signal generator 104, which generates a plurality of local oscillator signals LO₁ through LO_{N}.

The digital signal generator 104 also generates a reference signal S, which represents a zero degree intermediate frequency (IF) signal. The reference signal S may have a frequency of 2.22 KHz, for example, or any other suitable frequency.

The local oscillator signals are approximately the same in frequency as the frequency Fc. However, they are offset in phase from each other by Δθ, which is 60 degrees (i.e., n/3) for the case where N = 6. Each of the local oscillator signals, for example, may be represented by LOᵢ = cos ω_{c}t - cos[ω₀t+2Π(i/N)], where ω_{c} is the transmitted signal frequency, and ω₀ is a predetermined IF.

Meanwhile, N received signals R₁ through R_{N} are generated by the angular position sensor 10. Since the coupler pattern 34 interferes with and attenuates the transmission signals between the loop antennas 22 of the transmitter 12 and the receiver 16, the received signals have different amplitude based on the angular position of the coupler disk 14. The signal amplitude at each receiver (Rᵢ), for example, is defined by Rᵢ(t) = Aᵢcos(ω_{c}t), where Aᵢ = A cos [θ + 2π (i/N)]. In other words, while A is the magnitude of the signal transmitted by each of the loop antennas 22 in the transceiver 12, due to variable attenuation provided by the coupler disk 14, the magnitude of the signal received by the loop antennas 22 in the receiver 16 are different from one another and are given by Aᵢ = A cos [θ + 2n (i/N)], and depends on the angular position (θ) of the coupler disk 14.

The received signals R₁ through R_{N} are first mixed with the local oscillator signals LO₁ through LO_{N}. First, the received signals are down converted by the corresponding local oscillator signals by mixers 106, 108 through 110, respectively, to generate IF signals IF₁ through IF_{N}. Based on the mixer down conversion process, the relationship between LO, IF and RF (transmitted frequency) is defined by IF = RF - LO. Assuming a lossless mixer, each of the IF signals may be represented by IFᵢ = Aᵢ cos[ω₀t + 2π (i/N)].

The IF signals are then converted into a single sinusoidal signal using a summing amplifier 112 such that the phase shift changes of the signal depend on the angular position of the coupler disk. Since the signals received by each of the channels are ratiometric with respect to each other, variations in the transmitted signal amplitude have no effect on the resulting phase information. The signal at the output of the amplifier 112 is given by IF = ½Acos (ω₀t - θ). From this equation, it can be seen that the output signal of the amplifier 112 is a phase relationship representing the angular position of the coupler disk 14 and is not dependent on the transmitted signal amplitude variation. The signal output of the summing amplifier 112 is passed through a low pass filter/amplifier 114 and a comparator 116 to generate a combined received signal R (which may also be referred to hereafter as a "received signal").

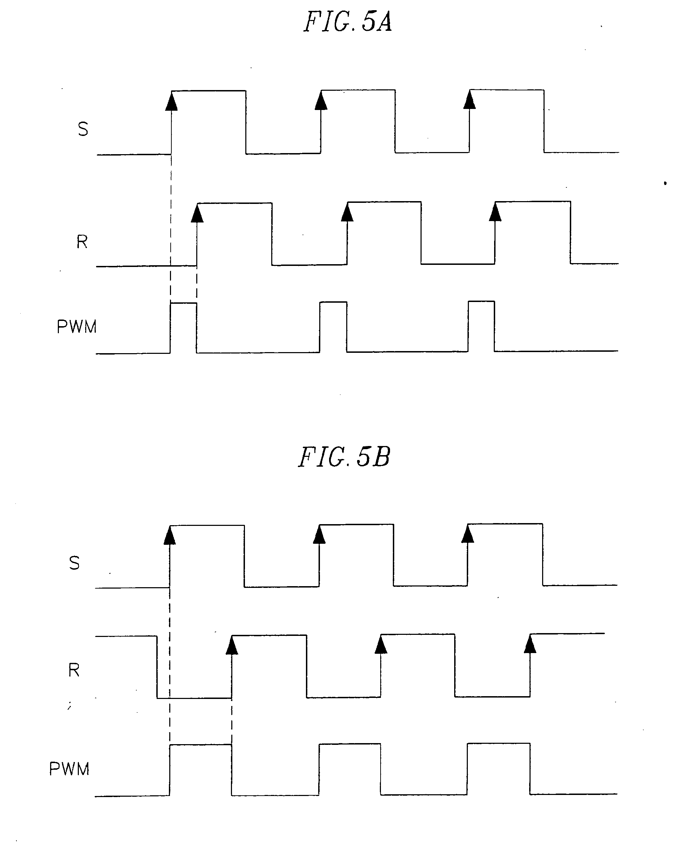

The PWM output of the single turn angular position sensor is generated by comparing the received signal R to the reference signal S in a PWM generator 118 as shown in FIG. 4. For the single turn angular position sensor, the PWM generator may simply be or include a flip flop, such as an RS flip flop. FIGs. 5A and 5B illustrate, respectively, S, R and PWM outputs for 10% duty cycle and 40% duty cycle. The PWM output is also provided to PWM to analog converter 120.

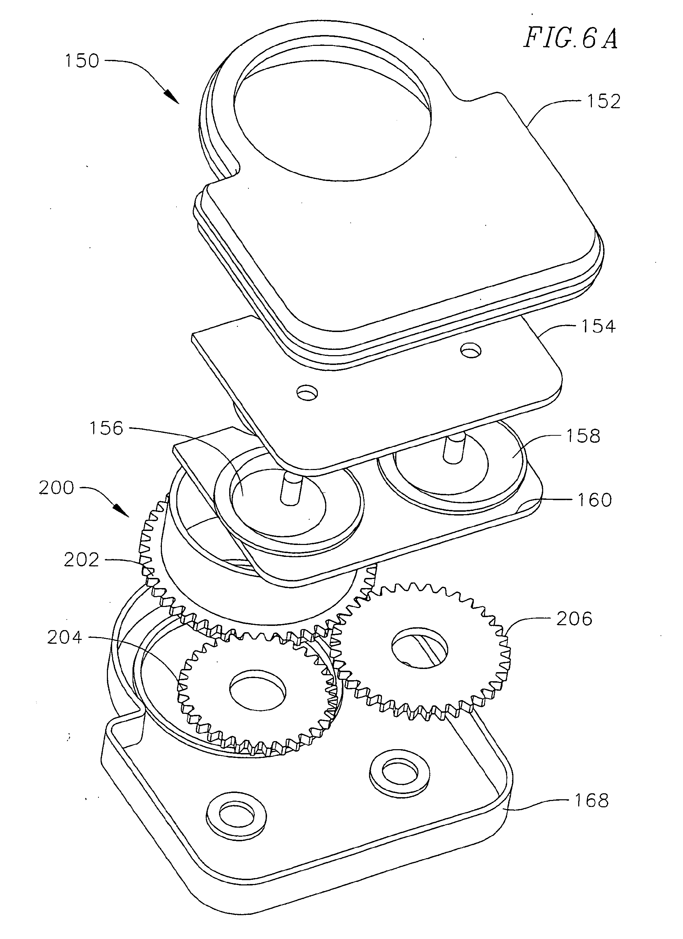

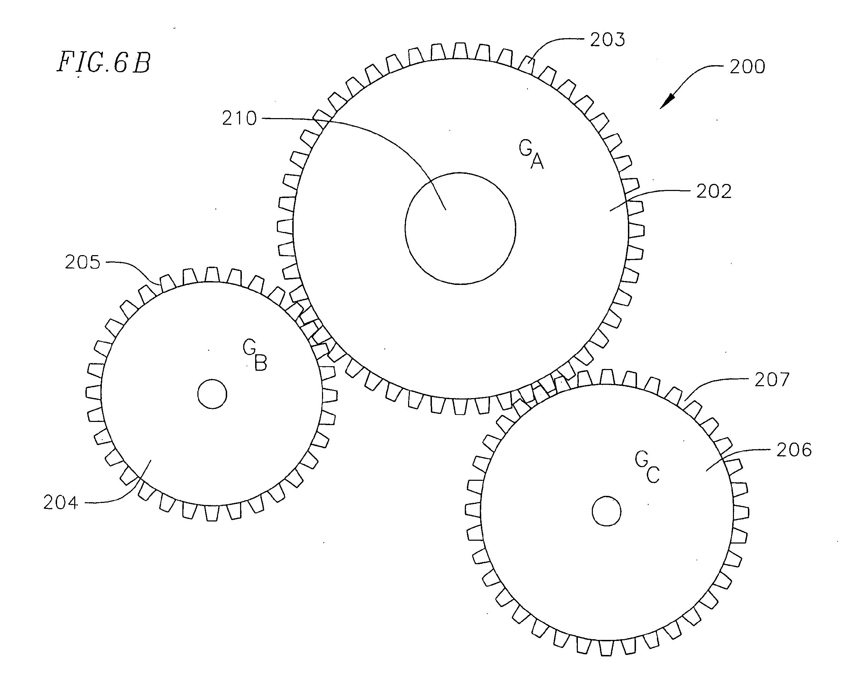

For a multi-turn angular position sensor in an exemplary embodiment according to the present invention, the Vernier concept is used. A mechanical design for a multi-turn angular position sensor package 150 (e.g., MT-NCAPS) using the Vernier concept is shown in FIG. 6A. The multi-turn (MT) angular position sensor package 150 of FIG. 6A includes a top cover 152, a receiver printed circuit board (RX PCB) 154, coupler disks 156 and 158, a transmitter PCB (TX PCB) 160, a gear assembly 200 including a main gear 202 and secondary (or Vernier or coupler disk) gears 204, 206, and a bottom housing or cover 168. When assembled, the MT angular position sensor package 150 can be mounted, for example, on a steering shaft (e.g., shaft 210 of FIG. 6B) of an automobile.

The coupler disk 156 is mechanically coupled to the gear 206 such that they rotate together, while the coupler disk 158 is mechanically coupled to the gear 204 such that they rotate together.

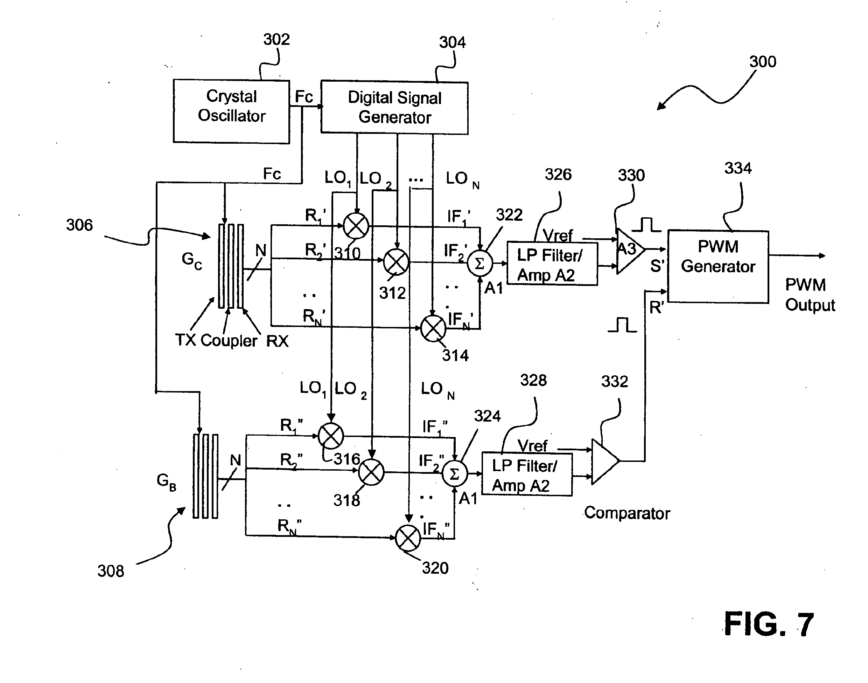

The MT angular position sensor package 150 of FIG. 6A, which may be constructed using two angular position sensor front ends as can be seen in FIG. 7, can generate a multi-turn PWM output with the same resolution and accuracy as the single-turn NCAPS. For example, each angular position sensor front end includes an angular position sensor assembly including a transmitter 12 (mounted on the TX PCB 160), a receiver 16 (mounted on the RX PCB 154), a coupler disk 14 (See FIG. 1 or coupler disks 156 and 158 of FIG. 6A). The angular position sensor front end also includes a coupler mixer (e.g., multipliers 106, 108 through 110), a filter 114 and a comparator 116 (e.g., see FIG. 4). These circuitry may also be mounted/implemented on the TX PCB 160 and/or the RX PCB 154.

Referring back to FIGs. 6A and 6B, the gear assembly 200 of the MT angular position sensor package 150 includes a main gear G_{A} 202 which is mounted, for example, on a steering shaft 210 of a driving wheel. The gear assembly 200 also includes a pair of gears G_{B} 204 and G_{C} 206. In the MT angular position sensor package 150, an output of a first angular position sensor assembly coupled to the gear G_{B} 204 is used as a measurement for the PWM output generator, and an output of the second angular position sensor assembly coupled to the gear G_{C} 206 is used as a reference for the PWM generator.

As can be seen in FIGs. 6A and 6B, the main gear 202 has a plurality of teeth 203 encircling its periphery. Similarly, the first and second gears 204 and 206 have a plurality of teeth 205 and 207 encircling their respective peripheries. Therefore, the gears 204 and 206 are coupled to the main gear 202 via their respective teeth. The PWM output generated by the MT angular position sensor package 150 is defined by the ratio or relationship between the number of teeth that the main gear 202, the first gear 204 and the second gear 206 have around their respective peripheries.

In the embodiment shown in FIGs. 6A and 6B, the relationship between G_{A}, G_{B} and G_{C} are as shown in Equation 1 as follows.

N*TG_{A}/TG_{B} - N*TG_{A}/TG_{C} = 1 turn. (Equation 1)
where TG_{A} = number of teeth 203 on the main gear G_{A} 202, TG_{B} = number of teeth 205 on the first gear G_{B} 204 coupled to the first angular position sensor assembly, TG_{C} = number of teeth 207 on the second gear G_{C} 206 coupled to the second angular position sensor assembly, and N = number of turns of G_{A}.

By way of example, in the case where the number of teeth 203 of the main gear TG_{A} = 48, the number of teeth 205 of the first angular position sensor assembly TG_{B} = 32, and the number of teeth 205 of the second angular position sensor assembly TG_{C} = 36, and N = 6, Equation 1 becomes N*TG_{A}/TG_{B} - N*TG_{A}/TG_{C} = 6 x 48/32 - 6x48/36 = 9-8 = 1 turn. In other words, with such ratio or relationship of the teeth on the main, first and second gears, while the main gear (and therefore the steering shaft on which the main gear is mounted) rotates 6 turns, the PWM output corresponding to a single turn (i.e., one full cycle) is generated.

A multi-turn angular position sensor (e.g., MT-NCAPS) functional block diagram 300 of FIG. 7 includes two angular position sensor front ends, which respectively include angular position sensor assemblies 308 and 306 coupled respectively to the first and second gears G_{B} and G_{C}. Each of the angular position sensor assemblies 308 and 306 receives a signal having frequency Fc generated by a crystal oscillator 302. The frequency Fc, for example, may be 1 MHz. The frequency used may be different in other embodiments.

The signal having frequency Fc is also provided to a digital signal generator 304, which generates a plurality of local oscillator signals LO₁ through LO_{N}. By way of example, the signal having frequency Fc and the local oscillator signals LO₁ through LO_{N} may be substantially identical to those of FIG. 4.

Meanwhile, N received signals R₁' through R_{N}' are generated by the angular position sensor assembly 306, while N received signals R₁" through R_{N}" are generated by the angular position sensor assembly 308. Because the coupler pattern on the coupler disk in each of the angular position sensor assemblies interferes with and attenuates the transmission of signals between the loop antennas the transmitter and the receiver, the received signals have different amplitude based on the angular position of the coupler disk in each angular position sensor assembly. The attenuation of the signals R₁' through R_{N}' received by the receiver in the angular position sensor assembly 306 and the attenuation of the signals R₁'' through R_{N}'' received by the receiver in the angular position sensor assembly 308, for example, may have substantially the same characteristics as the attenuation of the signals R₁ through R_{N} that are described in reference to FIG. 4.

The received signals R₁' through R_{N}' and R₁'' through R_{N}'', respectively, are first mixed with the local oscillator signals LO₁ through LO_{N}. The received signals R₁' through R_{N}' are down converted by the corresponding local oscillator signals by mixers 310, 312 through 314, respectively, to generate IF signals IF₁' through IF_{N}'. Further, the received signals R₁" through R_{N}" are down converted by the corresponding local oscillator signals by mixers 316, 318 through 320, respectively, to generate IF signals IF₁" through IF_{N}". Based on the mixer down conversion process, the relationship between LO, IF and RF (transmitted frequency) is defined by IF = RF - LO. Assuming a lossless mixer, each of the IF signals may be represented by IFᵢ' = Aᵢ cos[ω₀t + 2π (i/N)] or IFᵢ" = Aᵢ cos[ω₀t + 2π (i/N)].

The IF signals IF₁' through IF_{N}' are then converted into a single sinusoidal signal using a summing amplifier 322 such that the phase shift changes of the signal depend on the angular position of the corresponding coupler disk. Further, the IF signals IF₁" through IF_{N}" are converted into a single sinusoidal signal using a summing amplifier 324 such that the phase shift changes of the signal depend on the angular position of the corresponding coupler disk.

Since the signals received by each of the channels are ratiometric with respect to each other, variations in the transmitted signal amplitude have no effect on the resulting phase information. The signal at the output of the amplifier 322 is given by IF' = ½Acos (ω₀t - θ') while the signal at the output of the amplifier 324 is given by IF" = ½Acos(ω₀t - 8"). From this equation, it can be seen that the output signal of the amplifier 322 or 324 is a phase relationship representing the angular position of the respective coupler disk and is not dependent on the transmitted signal amplitude variation.

The signal outputs of the summing amplifiers 322 and 324 are respectively passed through low pass filter/amplifiers 326 and 328, and comparators 330 and 332 to generate combined received signals S' (which may also be referred to hereafter as a "reference signal") and R' (which may also be referred to hereafter as a "received signal"), respectively.

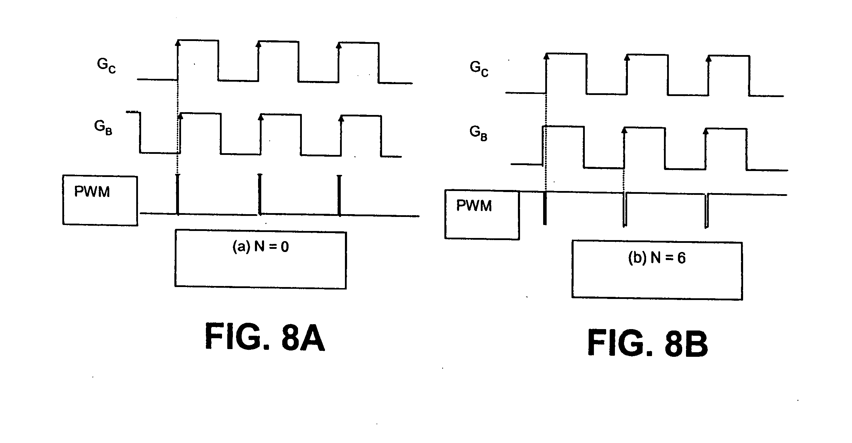

The PWM output of the multi-turn angular position sensor is generated by comparing the received signal R' to the reference signal S' in a PWM generator 334 as shown in FIG. 7. For the multi-turn angular position sensor, the PWM generator may simply be a flip flop, such as an RS flip flop. FIGs. 8A and 8B illustrate, respectively, the duty cycle generation of the multi-turn angular position sensor for N=0 and N=6.

The two angular position sensor front ends, each of which includes transmitter, receiver, coupler disk, coupler mixer, filter and comparator, produces two 50% duty cycle TTL signals that have their phase shift proportional to the rotation of the couplers. Electronic/electrical circuitry such as the coupler mixer, the filter and the comparator as well as a PWM generator may be implemented on a PCB, such as for example the TX PCB 160 and/or the RX PCB 154 of FIG. 6A.

When N = 0, G_{C} and G_{B} are in phase, and the output of PWM substantially equals to 0% duty cycle. The differential phase between G_{C} and G_{B} will be equal to (360°/N') x N, wherein N' is a predetermined number of turns. When G_{A} reaches N = N' turns, the delta phase between G_{C} and G_{B} equals to 360°, which means that the PWM output will be substantially at 100% duty cycle. The relationship of these two signals are shown on FIGs. 8A and 8B. It can be seen in FIGs. 8A and 8B that the PWM output is close to being a 0% duty cycle when N=0 but is close to being 100% duty cycle when N=6.

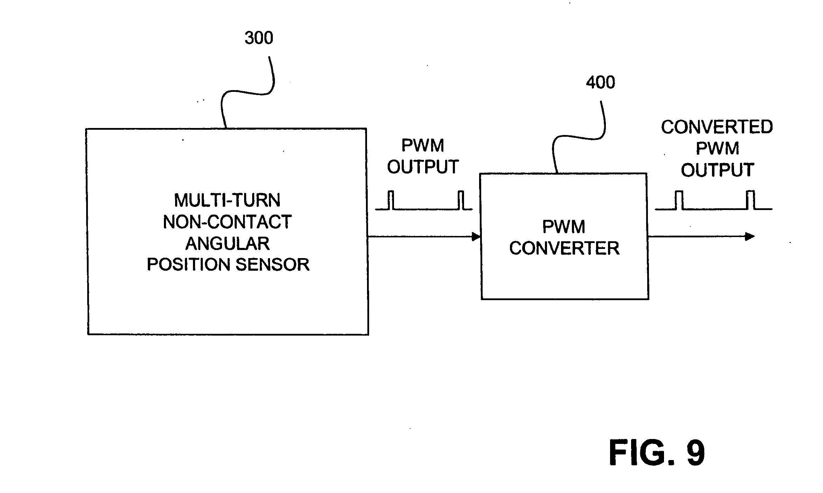

In FIG. 9, a PWM output of the multi-turn angular position sensor (e.g., MT-NCAPS) 300 is coupled to a PWM converter 400 in another exemplary embodiment of the present invention. The PWM converter 400 receives the PWM output, which has a 0% to 100% duty cycle, and converts the PWM output to any desired start and stop duty cycle range, for example, 5% to 95%. The PWM converter 400, for example, may be substantially the same as the digitally programmable PWM converter disclosed in U.S. Patent No. 6,545,621 entitled "Digitally Programmable Pulse-Width Modulation (PWM) Converter" issued April 8, 2003, the entire content of which is incorporated by reference herein.

While certain exemplary embodiments of the present invention have been described above in detail and shown in the accompanying drawings, it is to be understood that such embodiments are merely illustrative of and not restrictive of the broad invention. It will thus be recognized that various modifications may be made to the illustrated and other embodiments of the invention described above, without departing from the broad inventive scope thereof. In view of the above it will be understood that the invention is not limited to the particular embodiments or arrangements disclosed, but is rather intended to cover any changes, adaptations or modifications which are within the scope and spirit of the invention as defined by the appended claims and their equivalents.

For example, while the exemplary embodiments of the present invention have been described above in reference to the NCAPS architecture, the principles of the multi-turn angular position sensor of the present invention can be applied to any angular position sensor assemblies having a suitable output.

## Claims

1. A multi-turn angular position sensor for generating a pulse width modulated (PWM) output corresponding to greater than a 360 degree turn of a shaft, comprising:
a main gear adapted to be mounted on the shaft, the main gear having a plurality of teeth formed around its periphery;
a first gear having a plurality of first teeth formed around its periphery, the first teeth being engaged with the teeth of the main gear;
a second gear having a plurality of second teeth formed around its periphery, the second teeth being engaged with the teeth of the main gear;
a first angular position sensor assembly comprising a first coupler disk coupled to rotate together with the first gear, the first angular position sensor assembly being adapted to generate a first output signal corresponding to a single 360 degree turn of the first coupler disk;
a second angular position sensor assembly comprising a second coupler disk coupled to rotate together with the second gear, the second angular position sensor assembly being adapted to generate a second output signal corresponding to a single 360 degree turn of the second coupler disk; and
a PWM generator for generating the PWM output according to the first output signal and the second output signal.

2. The multi-turn angular position sensor of claim 1, wherein the PWM generator comprises a flip flop.

3. The multi-turn angular position sensor of claim 1, wherein a relationship between a number of the teeth of the main gear, a number of the first teeth and a number of the second teeth is determined such that the PWM output ranges from a 0% duty cycle to a 100% duty cycle as the shaft is rotated from an initial position by a predetermined number of turns.

4. The multi-turn angular position sensor of claim 3, wherein the predetermined number is 6, and the relationship between the number (TG_{A}) of the teeth of the main gear, the number (TG_{B}) of the first teeth and the number (TG_{C}) of the second teeth is N*TG_{A}/TG_{B} - N*TG_{A}/TG_{C} = 1 turn, where N is a number of turns of the main gear.

5. The multi-turn angular position sensor of claim 1, wherein at least one of the first angular position sensor assembly and the second angular position sensor assembly comprises a non-contact angular position sensor (NCAPS) assembly.

6. The multi-turn angular position sensor of claim 1, further comprising:
a first plurality of mixers for mixing the first output signal comprising a plurality of signals with local oscillator signals to generate a first sinusoidal signal indicative of rotation of the first coupler disk; and
a second plurality of mixers for mixing the second output signal comprising a plurality of signals with the local oscillator signals to generate a second sinusoidal signal indicative of rotation of the second coupler disk.

7. The multi-turn angular position sensor of claim 6, further comprising:
a first comparator to generate a first 50% duty cycle signal having a phase shift proportional to the rotation of the first coupler disk; and
a second comparator to generate a second 50% duty cycle signal having a phase shift proportional to the rotation of the second coupler disk.

8. The multi-turn angular position sensor of claim 7, wherein the PWM generator receives the first 50% duty cycle signal and the second 50% duty cycle signal to generate the PWM output.

9. The multi-turn angular position sensor of claim 1, wherein the PWM output has a duty cycle of 0% to 100%, the sensor further comprising a PWM converter for converting the PWM output to have a duty cycle different from 0% to 100%.

10. A steering shaft assembly comprising:
a shaft;
a multi-turn angular position sensor coupled to the shaft and for generating a pulse width modulated (PWM) output corresponding to greater than a 360 degree turn of the shaft, comprising:
a main gear mounted on the shaft, the main gear having a plurality of teeth formed around its periphery;
a first gear having a plurality of first teeth formed around its periphery, the first teeth being rotatably coupled to the teeth of the main gear;
a second gear having a plurality of second teeth formed around its periphery, the second teeth being rotatably coupled to the teeth of the main gear;
a first angular position sensor assembly comprising a first coupler disk coupled to rotate together with the first gear, the first angular position sensor assembly being adapted to generate a first output signal corresponding to a single 360 degree turn of the first coupler disk;
a second angular position sensor assembly comprising a second coupler disk coupled to rotate together with the second gear, the second angular position sensor assembly being adapted to generate a second output signal corresponding to a single 360 degree turn of the second coupler disk; and
a PWM generator for generating the PWM output according to the first output signal and the second output signal.

11. A method of generating a pulse width modulated (PWM) output corresponding to greater than a 360 degree turn of a shaft, the method comprising:
generating a first angular position output signal by engaging first teeth of a first gear coupled to a first angular position sensor assembly with a teeth of a main gear mounted on a shaft;
generating a second angular position output signal by engaging second teeth of a second gear coupled to a second angular position sensor assembly with the teeth of the main gear mounted on the shaft; and
generating the PWM output corresponding to the first output signal and the second output signal.

12. The method of claim 11, wherein generating the PWM output comprises generating the PWM output using a PWM generator comprising a flip flop.

13. The method of claim 11, wherein a relationship between a number of the teeth of the main gear, a number of the first teeth and a number of the second teeth is determined such that the PWM output ranges from a 0% duty cycle to a 100% duty cycle as the shaft is rotated from an initial position by a predetermined number of turns.

14. The method of claim 11, further comprising:
generating a first 50% duty cycle signal using the first angular position output signal;
generating a second 50% duty cycle signal using the second angular position output signal; and
combining the first 50% duty cycle and the second 50% duty cycle to generate the PWM output.
